# EUROPÄISCHE PATENTSCHRIFT

(11) **EP 4 399 103 B1**
(45) Veröffentlichungstag und Bekanntmachung des Hinweises auf die Patenterteilung: **23.07.2025**
(21) Anmeldenummer: 22761947.5
(22) Anmeldetag: 15.08.2022
(51) Int. Cl.: B60C 9/00, C25D 3/20, D07B 1/06, C08K 3/04, C08K 5/47, B60C 1/00

(54) **GUMMIERTER, METALLISCHER FESTIGKEITSTRÄGER UND FAHRZEUGLUFTREIFEN**
RUBBERIZED METALLIC STRENGTH MEMBER AND PNEUMATIC VEHICLE TIRE
ÉLÉMENT DE RÉSISTANCE MÉTALLIQUE CAOUTCHOUTÉ ET PNEU DE VÉHICULE

(30) Priorität: 06.09.2021 DE 102021209766
(43) Veröffentlichungstag der Anmeldung: 17.07.2024
(73) Patentinhaber: Continental Reifen Deutschland GmbH, 30175 Hannover (DE)
(72) Erfinder: KRAMER, Thomas, 30175 Hannover (DE); GUARDALABENE, Joseph, 30175 Hannover (DE); DE CASTRO PINHO, Daniel, 30175 Hannover (DE); SCHUNACK, Michael, 30175 Hannover (DE)
(74) Vertreter: Continental Corporation
(86) Internationale Anmeldenummer: PCT/DE2022/200184
(87) Internationale Veröffentlichungsnummer: WO 2023/030591

(56) Entgegenhaltungen:
- EP-A1- 3 476 624
- WO-A1-2020/156967
- US-A- 4 446 198
- WPI,, vol. 2010, no. 80, 11 November 2010 (2010-11-11), XP002807978
- DATABASE WPI Week 201080, Derwent World Patents Index; AN 2010-N97475, XP002807978

## Beschreibung

Die Erfindung betrifft einen mit einer schwefelvernetzbaren, im Wesentlichen von Cobalt freien Gummierungsmischung gummierten, metallischen Festigkeitsträger, wobei der metallische Festigkeitsträger ein Stahlcord ist, der ein oder mehrere Filamente enthält, wobei die Filamente ein filamentartiges Stahlsubstrat und eine das filamentartige Stahlsubstrat teilweise oder vollständig bedeckende Beschichtung umfassen, wobei die Beschichtung Messing umfasst, das aus Kupfer und Zink besteht, und wobei die Beschichtung mit Eisen angereichert ist, welches als Partikel mit einer Größe zwischen 10 und 10000 nm im Messing vorliegt.

Ferner betrifft die Erfindung einen Fahrzeugluftreifen, der einen solchen mit einer schwefelvernetzten Gummierungsmischung gummierten, metallischen Festigkeitsträger aufweist.

Die Anhaftung von Stahlcorden an eine Kautschukmatrix gelingt über Messing (auf dem Stahl) und Schwefel (aus der Gummierungsmischung).

Schwefelvernetzbare Gummierungsmischungen für vermessingten Stahlcord, enthalten in der Regel auf Cobalt basierende Haftsysteme, die beispielsweise noch Methylenakzeptor-Methylendonor-Paare aufweisen. Die Cobaltverbindungen, in der Regel organische Cobaltsalze, sollen dabei einen zu schnellen Aufbau von Zinkoxid- und Kupfersulfidlagen auf der Messingschicht des Stahlcorde, welche sich während des Alterns der Gummi-Stahlcord-Verbundes bilden, hemmen. Die Zinkoxid- und Kupfersulfidlagen können im Verlauf der Lebensdauer spröde werden und so zu einer verminderten Haftung zwischen Stahlcord und Gummi führen. Die Cobaltverbindungen führen zu einer Verbesserung der Haftung unter Beanspruchung bei feuchter und heißer Umgebung.

Die Verwendung von Cobaltsalzen für Gummierungsmischungen ist jedoch auch mit einigen Nachteilen behaftet. Organische Cobaltsalze können zum einen als Oxidationskatalysatoren wirken und daher zu unerwünschten Alterungsprozessen innerhalb der Mischungsschichten führen. Zum anderen werden Cobalt und dessen Salze als gesundheitsschädlich eingestuft und der Abbau von Cobalt und die Herstellung der Salze schädigt die Umwelt. Außerdem besteht weltweit ein wachsender Bedarf an Cobalt in der Batterieindustrie. Es ist daher zu erwarten, dass die derzeit schon hohen Preise für Cobalt in den nächsten Jahren weiter steigen.

Man ist daher bestrebt, Cobalt in Gummierungsmischungen zu reduzieren.

Um dies zu erreichen, hat man z. B. Stahlcorde mit speziellen Legierungen auf der Oberfläche entwickelt, die schon Cobalt enthalten. Derartige Stahlcorde mit cobalthaltigen Legierungen werden z. B. in der EP 2 516 729 B1 beschrieben. Auf diese Weise wird der Cobaltverbrauch allerdings nur reduziert. Das Cobalt wird von der Mischungsseite auf die Seite des Stahlcordes verschoben.

Einen anderen Weg, auf Cobalt in Gummierungsmischungen zu verzichten offenbart die WO 2020/156967 A1. In dieser Schrift werden mit einer schwefelvernetzbaren, im Wesentlichen von Cobalt freien Gummierungsmischung gummierte, metallische Festigkeitsträger der eingangs genannten Art, Verfahren zu deren Herstellung sowie deren Verwendung beschrieben. Die Festigkeitsträger weisen eine Messingbeschichtung auf, die mit Eisenpartikeln im Nanometerbereich dotiert ist. Derartige Festigkeitsträger sind kompatibel mit Gummierungsmischungen, die im Wesentlichen frei von Cobalt sind und können z. B. in Fahrzeugluftreifen eingesetzt werden.

Entfernt man die Cobaltverbindungen aus den Gummierungsmischungen, hat sich allerdings gezeigt, dass sich die Mischungseigenschaften verändern. Insbesondere die Vulkanisationszeiten werden bei ansonsten unveränderter Zusammensetzung der Mischung deutlich länger. Dies ist oftmals nicht erwünscht, da die Gummierung der Festigkeitsträger, beispielsweise der Gürtelgummierung in Fahrzeugluftreifen, häufig der heizzeitbestimmende Bereich im Gummiprodukt ist und eine Verlängerung der Heizzeit der Gummierungsmischung eine Verlängerung der Heizzeit des gesamten Produktes mit den daraus resultierenden Problemen, wie Übervulkanisation einzelner Bereiche und Nachteile in der Wirtschaftlichkeit, zur Folge hat. Wirkt man dieser Verlängerung der Vulkanisationszeiten beispielsweise durch größere Mengen an Vulkanisationsbeschleuniger entgegen, kann es vorkommen, dass die Vernetzung zu Beginn so schnell verläuft, dass sich keine ausreichende Haftschicht zwischen Festigkeitsträger und einbettenden Gummierungsmischung ausbilden kann.

Der Erfindung liegt die Aufgabe zu Grunde, einen mit einer schwefelvernetzbaren, im Wesentlichen von Cobalt freien Gummierungsmischung gummierten, metallischen Festigkeitsträger der eingangs genannten Art bereitzustellen, der hinsichtlich der Vulkanisationszeiten optimiert ist und gleichzeitig eine gute Festigkeitsträger-Gummi-Haftung aufweist.

Gelöst wird die Aufgabe erfindungsgemäß dadurch, dass die Gummierungsmischung 0,5 bis 3 phr (Gewichtsteile, bezogen auf 100 Gewichtsteile der gesamten Kautschuke in der Mischung) zumindest eines Sulfenimidbeschleunigers und/oder zumindest eines Sulfenamidbeschleunigers, der auf Dibenzylamin basiert, enthält.

Unter einer im Wesentlichen von Cobalt freien Gummierungsmischung ist dabei eine Gummierungsmischung zu verstehen, die im Wesentlichen frei von Cobalt oder organischen Cobaltverbindungen ist. Der Gehalt an Cobalt, gemessen mittels Röntgenfluoreszenzspektroskopie, ist in der vulkanisierten Gummierungsmischung kleiner als 0,01 Gew.-% bezogen auf das Gewicht der vulkanisierten Gummimischung.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Überraschenderweise hat sich gezeigt, dass durch die Verwendung eines Sulfenimidbeschleunigers und/oder eines speziellen Sulfenamidbeschleunigers, der auf Dibenzylamin basiert, in den angegebenen Mengen auch ohne die Anwesenheit von Cobalt eine optimale Balance zwischen nicht zu schneller anfänglicher Vernetzung (nicht zu kurze Anvulkanisationszeit t₁₀) und nicht zu langsamer Endvernetzung (nicht zu lange Ausvulkanisationszeit t₉₀) erzielt werden kann.

Der erfindungsgemäße gummierte, metallische Festigkeitsträger weist außerdem den Vorteil einer guten Haftung auch nach Alterung, insbesondere Dampfalterung, auf.

Zusätzlich bietet der erfindungsgemäße gummierte, metallische Festigkeitsträger die ökologischen und ökonomischen Vorteile einer cobaltfreien Mischung und eines cobaltfreien Festigkeitsträgers.

Die Haftung zwischen Festigkeitsträger und einbettender Gummierungsmischung lässt sich weiter verbessern, wenn die Beschichtung mit Eisen angereichert ist, welches als Partikel mit einer Größe zwischen 20 und 5000 nm im Messing vorliegt.

Gemäß einer bevorzugten Weiterbildung der Erfindung umfasst das Messing der Beschichtung mindestens 63 Gew.-% Kupfer, wobei der Rest Zink ist. Die Menge an Eisen ist gemäß der Erfindung nicht von der Definition des Messings umfasst. Die Beschichtung des Festigkeitsträgers umfasst dann Messing und Eisen.

Vorzugsweise ist die Eisenmenge in der Beschichtung größer oder gleich 1 Gew.-% und kleiner als 10 Gew.-%, besonders bevorzugt größer oder gleich 3 Gew.-% und kleiner als 9 Gew.-%, im Vergleich zur Gesamtmasse von Messing und Eisen.

Bei Eisenmengen von mehr als 10 Gew.-% können sich Probleme beim Ziehen der Filamente ergeben.

Für eine bessere Verarbeitbarkeit der Filamente ist die Beschichtung im Wesentlichen frei von Zink-Eisen-Legierungen.

Die Gummierungsmischung enthält, 0,5 bis 3 phr, vorzugsweise 1 bis 2,5 phr, zumindest eines Sulfenimidbeschleunigers und/oder zumindest eines Sulfenamidbeschleunigers, der auf Dibenzylamin basiert.

Bei Sulfenimidbeschleunigern handelt es sich um Vulkanisationsbeschleuniger, die auf primären Aminen basieren. Im Gegensatz dazu basieren Sulfenamidbeschleuniger wie DCBS (N,N'-Dicyclohexyl-2-benzothiazolsulfenamid) oder MBS (N-Oxydiethylen-2-benzothiazolsulfenamid) auf sekundären Aminen. Es können ein oder mehrere Sulfinimidbeschleuniger in der Mischung enthalten sein.

Für ein besonders ausgewogenes Verhältnis von Anvulkanisationszeit t₁₀ und Ausvulkanisationszeit t₉₀ handelt es sich bei dem Sulfenimidbeschleuniger um N-tert.-Butyl-2-benzothiazolsulfenimid (TBSI, IUPAC-Bezeichnung: N,N-bis(1,3-Benzothiazol-2-ylsulfanyl)-2-methylpropan-2-amin). Die Verwendung des Sulfenimidbschleunigers N-tert.-Butyl-2-benzothiazolsulfenimid (TBSI) als Vulkanisationsbeschleuniger in cobalthaltigen Gummierungsmischungen ist beispielsweise aus der US 2010/0200141 A1 und der US 6,120,911 bekannt.

Bei den Sulfenamidbeschleunern auf der Basis von Dibenzylamin handelt es sich um Substanzen, die sich vom 2-Mercaptobenzothiazol ableiten und bei denen am Mercaptoschwefel ein Dibenzylamin angebunden wurde. Es können ein oder mehrere Sulfinamidbeschleuniger auf der Basis von Dibenzylamin in der Mischung enthalten sein.

Gemäß einer bevorzugten Weiterbildung der Erfindung handelt es sich bei Sulfenamidbeschleuniger, der auf Dibenzylamin basiert, um N,N'-Dibenzyl-2-benzothiazolsulfenamid (DBBS).

Um die Haltbarkeit der Gummi-Metall-Haftung im Hinblick auf oxidative Alterungsprozesse weiter zu verbessern, hat es sich als vorteilhaft erwiesen, wenn die Gummierungsmischung 2 bis 10 phr Zinkoxid enthält.

Zur weiteren Haftungsverbesserung kann die Gummierungsmischung Methylenakzeptor-Methylendonor-Paare in üblichen Mengen enthalten. Als Methylakzeptoren können dabei resorcinbasierte Methylenakzeptoren oder spezielle Novolak-Harze, wie Alnovol^{®} PN 760/Past, der Firma Allnex Netherlands B. V., dienen. Als Methylendonor/Formaldehydspender können z. B. veretherte Melaminharze enthalten sein. Zu den veretherten Melaminharzen zählen beispielsweise Hexamethoxymethylmelamin (HMMM) und Hexamethylentetramin (HMT).

Zusätzlich kann die Gummierungsmischung weitere nach der Vulkanisation wirkende Haftungsstabilisator, wie Natrium-Hexamethylen-1,6-bisthiosulfat-Dihydrat (NaO₃SS(CH₂)₆SSO₃Na·2 H₂O), enthalten.

Die schwefelvernetzbare Gummierungsmischung enthält weitere in der Kautschukindustrie übliche Bestandteile, insbesondere zumindest einen Kautschuk.

Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Gummierungsmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%. Unter Naturkautschuk wird Kautschuk verstanden, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann.

Enthält die Gummierungsmischung als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte StyrolButadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die StyrolButadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Der Gummierungsmischung kann als Verarbeitungshilfsmittel und zur Mischungsverbilligung auch Regenerat (Reclaim) zugesetzt werden.

Die Gummierungsmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Gummierungsmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Gummierungsmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, - NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die Gummierungsmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Gummierungsmischung zugesetzt. Bevorzugt wird Schwefel in einer Menge von 2 bis 5 phr eingesetzt. Vorzugsweise wird Schwefel in ölverstreckter Form verwendet. Auf diese Weise kann der Schwefel einfacher und gleichmäßiger eingearbeitet und dispergiert werden.

Des Weiteren kann die Gummierungsmischung neben den Sulfenimidbeschleunigern und den Sulfenamidbeschleunigern, die auf Dibenzylamin basieren, weitere vulkanisationsbeeinflussende Substanzen wie weitere Vulkanisationsbeschleuniger, Vulkanisationsverzögerer und Vulkanisationsaktivatoren in üblichen Mengen enthalten. Vorzugsweise enthält die Gummierungsmischung neben den Sulfenimidbeschleunigern und den Sulfenamidbeschleunigern, die auf Dibenzylamin basieren, weniger als 0,5 phr andere Vulkanisationsbeschleuniger.

Die Herstellung der Gummierungsmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die gummierten Festigkeitsträger können in unterschiedlichsten Gummiprodukten, in denen Festigkeitsträger vorhanden sind, eingesetzt werden. Bei diesen Gummiprodukten kann es sich z. B. um Reifen, Antriebsriemen, Fördergurte, Schläuche, gummierte Gewebe oder Luftfedern handeln. Bei den Reifen kann es sich um z. B. PKW-, Van-, LKW-, Industrie-, Zweirrad-, Landwirtschafts- oder Flugzeugreifen handeln.

Vorzugsweise werden die gummierten, metallischen Festigkeitsträger in Fahrzeugluftreifen eingesetzt. Bei den Fahrzeugluftreifen handelt es sich bevorzugt um PKW-, Van- oder LKW-Reifen.

Die gummierten, metallischen Festigkeitsträger können in Form unterschiedlichster Reifenbauteile, wie dem Wulstkern, den Wulstabdeckungen, den Wulstverstärkern, dem Gürtel, der Karkasse oder den Gürtelbandagen, eingesetzt werden, wobei auch mehrere Bauteile innerhalb eines Reifens die erfindungsgemäßen gummierten, metallischen Festigkeitsträger aufweisen können. Die Herstellung der erfindungsgemäßen Fahrzeugluftreifen erfolgt dabei nach dem Fachmann bekannten Verfahren.

Vorzugsweise enthält der Gürtel und/oder die Karkasse des Fahrzeugluftreifens die gummierten, metallischen Festigkeitsträger. Die guten Haftwerte zwischen Festigkeitsträger und Gummierungsmischung, auch unter Alterung, führen zu einer hohen Lebensdauer des Fahrzeugluftreifens und der Fahrzeugluftreifen lässt sich in wirtschaftlicher Weise herstellen.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Gummierungsmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand der nachstehenden Tabelle näher erläutert werden.

In der Tabelle 1 sind Beispielmischungen für eine Gummierung metallischer Festigkeitsträger eines Fahrzeugluftreifens angegeben.

Bei den Mischungen der Tabelle wurden die Vulkanisationsbeschleuniger und das Cobaltstearat variiert.

Die Mischungsherstellung erfolgte unter üblichen Bedingungen unter Herstellung einer Grundmischung und anschließend der Fertigmischung in einem Labortangentialmischer.

Es wurden die Umsatzzeiten von 10 und 90 % Umsatz (t₁₀: Anvulkanisationszeit, t₉₀: Ausvulkanisationszeit) mittels rotorlosem Vulkameter (MDR = Moving Disc Rheometer) gemäß DIN 53 529 bei Vulkanisation von 160 °C bestimmt.

Ferner wurden mit den Mischungen aus der Tabelle 1 Versuche zur Haftung an herkömmlichem vermessingtem Stahlcord A (2x0,3 HT, Messing: 63,5 Gew.-% Kupfer, 36,5 % Gew.-% Zink, Eisengehalt der Beschichtung: 0 Gew-%) und an erfindungsgemäßem, eisendotierten vermessingten Stahlcord B (2x0,3 HT, wobei die Beschichtung zusammengesetzt ist aus 64,1 Gew.-% Kupfer, 32,6 Gew.-% Zink, 3,3 Gew.-% Eisen mit einer Partikelgrößenverteilung von der Eisenpartikel zwischen 20 und 5000 nm) gemäß ASTM 2229/D1871 ohne Alterung und nach fünftägiger Alterung in Sattdampf bei 105 °C vorgenommen (Prüfkörperherstellung: Vulkanisation: 30 min, 150 °C, Einbettlänge in die Gummierungsmischung: 10 mm, Auszugsgeschwindigkeit: 125 mm/min). Es wurden die Herausziehkraft und die Bedeckung bestimmt. Bei der Herausziehkraft wurde der Wert der Mischung 1 als 100 % gesetzt; die Werte der anderen Mischungen wurden auf die Mischung 1 bezogen.

**Tabelle 1**

| **Bestandteile** | **Einheit** | **1** | **2** | **3** | **4** |
|---|---|---|---|---|---|
| Naturkautschuk (Polyisopren) | phr | 100 | 100 | 100 | 100 |
| Ruß | phr | 63 | 63 | 63 | 63 |
| Weichmacher und Alterungsschutzmittel | phr | 9,6 | 9,6 | 9,6 | 9,6 |
| Cobaltstearat | phr | 1,3 | - | - | - |
| Methylenakzeptor-Methylendonor-Paar | phr | 7,2 | 7,2 | 7,2 | 7,2 |
| Beschleuniger DCBS | phr | 0,75 | 0,75 | - | - |
| Beschleuniger TBSI | phr | - | - | 1,0 | - |
| Beschleuniger DBBS | phr | - | - | - | 2,2 |
| Schwefel, verstr. mit 33 Gew.-% Öl | phr | 6,75 | 6,75 | 6,75 | 6,75 |

| **Eigenschaften** | | | | | |
|---|---|---|---|---|---|
| t₁₀ | min | 1,09 | 0,98 | 0,88 | 0,85 |
| t₉₀ | min | 11,31 | 18,19 | 10,75 | 12,02 |
| Herausziehkraft (ungealt., Stahlcord A) | % | 100 | 97 | 91 | 102 |
| Bedeckung (ungealt., Stahlcord A) | % | 100 | 95 | 95 | 92 |
| Herausziehkraft (ungealt., Stahlcord B) | % | 100 | 99 | 105 | 104 |
| Bedeckung (ungealt., Stahlcord B) | % | 98 | 96 | 100 | 85 |
| Herausziehkraft (gealtert, Stahlcord A) | % | 80 | 57 | 61 | 58 |
| Bedeckung (gealtert, Stahlcord A) | % | 99 | 92 | 94 | 80 |
| Herausziehkraft (gealtert, Stahlcord B) | % | 87 | 91 | 87 | 91 |
| Bedeckung (gealtert, Stahlcord B) | % | 96 | 97 | 99 | 90 |

Aus der Tabelle wird ersichtlich, dass mit den Mischungen 3 und 4 optimale Vulkanisationszeiten erhalten werden können. Insbesondere die Ausvulkanisationszeit t₉₀ liegt mit TBSI oder DBBS als Beschleuniger im Bereich oder sogar unterhalb der Zeit der Referenzmischung. Gleichzeitig können mit diesen Mischungen im Zusammenspiel mit dem eisendotierten Stahlcord B sehr gute Haftungsergebnisse erzielt werden, die im Bereich des Referenzmischung 1 oder sogar darüber liegen.

## Patentansprüche

1. Mit einer schwefelvernetzbaren, im Wesentlichen von Cobalt freien Gummierungsmischung gummierter, metallischer Festigkeitsträger,
wobei der metallische Festigkeitsträger ein Stahlcord ist, der ein oder mehrere Filamente enthält,
- wobei die Filamente ein filamentartiges Stahlsubstrat und eine das filamentartige Stahlsubstrat teilweise oder vollständig bedeckende Beschichtung umfassen,
- wobei die Beschichtung Messing umfasst, das aus Kupfer und Zink besteht, und
- wobei die Beschichtung mit Eisen angereichert ist, welches als Partikel mit einer Größe zwischen 10 und 10000 nm im Messing vorliegt,
**dadurch gekennzeichnet, dass**
die Gummierungsmischung 0,5 bis 3 phr (Gewichtsteile, bezogen auf 100 Gewichtsteile der gesamten Kautschuke in der Mischung) zumindest eines Sulfenimidbeschleunigers und/oder zumindest eines Sulfenamidbeschleunigers, der auf Dibenzylamin basiert, enthält.

2. Gummierter, metallischer Festigkeitsträger nach Anspruch 1, **dadurch gekennzeichnet, dass** die Beschichtung mit Eisen angereichert ist, welches als Partikel mit einer Größe zwischen 20 und 5000 nm im Messing vorliegt.

3. Gummierter, metallischer Festigkeitsträger nach Anspruch 1 oder 2, **dadurch gekennzeichnet, dass** das Messing mindestens 63 Gew.-% Kupfer umfasst, wobei der Rest Zink ist.

4. Gummierter, metallischer Festigkeitsträger nach zumindest einem der vorhergehenden Ansprüche, **dadurch gekennzeichnet, dass** die Eisenmenge in der Beschichtung größer oder gleich 1 Gew.-% und kleiner als 10 Gew.-%, vorzugsweise größer oder gleich 3 Gew.-% und kleiner als 9 Gew.-%, im Vergleich zur Gesamtmasse von Messing und Eisen ist.

5. Gummierter, metallischer Festigkeitsträger nach zumindest einem der vorhergehenden Ansprüche, **dadurch gekennzeichnet, dass** die Beschichtung im Wesentlichen frei von Zink-Eisen-Legierungen ist.

6. Gummierter, metallischer Festigkeitsträger nach zumindest einem der vorhergehenden Ansprüche, **dadurch gekennzeichnet, dass** ist sie 1 bis 2,5 phr zumindest eines Sulfenimidbeschleunigers und/oder zumindest eines Sulfenamidbeschleunigers, der auf Dibenzylamin basiert, enthält.

7. Gummierter, metallischer Festigkeitsträger nach zumindest einem der vorhergehenden Ansprüche, **dadurch gekennzeichnet, dass** der zumindest eine Sulfenimidbeschleuniger N-tert.-Butyl-2-benzothiazolsulfenimid (TBSI) ist.

8. Gummierter, metallischer Festigkeitsträger nach zumindest einem der vorhergehenden Ansprüche, **dadurch gekennzeichnet, dass** der zumindest eine Sulfenamidbeschleuniger, der auf Dibenzylamin basiert, N,N'-Dibenzyl-2-benzothiazolsulfenamid (DBBS) ist.

9. Fahrzeugluftreifen, der einen mit einer schwefelvernetzten Gummierungsmischung gummierten, metallischen Festigkeitsträger gemäß Anspruch 1 aufweist.

10. Fahrzeugluftreifen nach Anspruch 9, **dadurch gekennzeichnet, dass** der Gürtel und/oder die Karkasse den gummierten, metallischen Festigkeitsträger enthält.

## Claims

1. Metallic strength member rubberized with a sulfur-crosslinkable, essentially cobalt-free rubberization mixture,
wherein the metallic strength member is a steel cord containing one or more filaments,
- wherein the filaments comprise a steel substrate filament and a coating that partly or completely covers the steel substrate filament,
- wherein the coating comprises brass consisting of copper and zinc, and
- wherein the coating is enriched with iron in the form of particles having a size between 10 and 10 000 nm in the brass,
**characterized in that**
the rubberization mixture contains 0.5 to 3 phr (parts by weight, based on 100 parts by weight of all rubbers in the mixture) of at least one sulfenimide accelerator and/or at least one dibenzylamine-based sulfenamide accelerator.

2. Rubberized metallic strength member according to Claim 1, **characterized in that** the coating is enriched with iron in the form of particles having a size between 20 and 5000 nm in the brass.

3. Rubberized metallic strength member according to Claim 1 or 2, **characterized in that** the brass comprises at least 63% by weight of copper, the balance being zinc.

4. Rubberized metallic strength member according to at least one of the preceding claims, **characterized in that** the amount of iron in the coating is not less than 1% by weight and less than 10% by weight, preferably not less than 3% by weight and less than 9% by weight, by comparison with the total mass of brass and iron.

5. Rubberized metallic strength member according to at least one of the preceding claims, **characterized in that** the coating is essentially free of zinc-iron alloys.

6. Rubberized metallic strength member according to at least one of the preceding claims, **characterized in that** it contains 1 to 2.5 phr of at least one sulfenimide accelerator and/or at least one dibenzylamine-based sulfenamide accelerator.

7. Rubberized metallic strength member according to at least one of the preceding claims, **characterized in that** the at least one sulfenimide accelerator is N-tert-butyl-2-benzothiazolesulfenimide (TBSI).

8. Rubberized metallic strength member according to at least one of the preceding claims, **characterized in that** the at least one dibenzylamine-based sulfenamide accelerator is N,N'-dibenzyl-2-benzothiazolesulfenamide (DBBS).

9. Pneumatic vehicle tire including a metallic strength member rubberized with a sulfur-crosslinked rubberization mixture according to Claim 1.

10. Pneumatic vehicle tire according to Claim 9, **characterized in that** the belt and/or carcass contains the rubberized metallic strength member.

## Revendications

1. Support de résistance métallique caoutchouté avec un mélange de gommage réticulable au soufre, essentiellement exempt de cobalt,
le support de résistance métallique étant un câble d'acier contenant un ou plusieurs filaments,
- les filaments comprenant un substrat filamentaire en acier et un revêtement recouvrant partiellement ou totalement le substrat filamentaire en acier,
- le revêtement comprenant du laiton constitué de cuivre et de zinc, et
- le revêtement étant enrichi en fer, lequel est présent dans le laiton sous forme de particules d'une taille comprise entre 10 et 10 000 nm,
**caractérisé en ce que**
le mélange de gommage contient de 0,5 à 3 pce (parties en poids, par rapport à 100 parties en poids du total des caoutchoucs dans le mélange) d'au moins un accélérateur sulfénimide et/ou d'au moins un accélérateur sulfénamide à base de dibenzylamine.

2. Support de résistance métallique caoutchouté selon la revendication 1, **caractérisé en ce que** le revêtement est enrichi en fer, qui est présent dans le laiton sous forme de particules d'une taille comprise entre 20 et 5 000 nm.

3. Support de résistance métallique caoutchouté selon la revendication 1 ou 2, **caractérisé en ce que** le laiton comprend au moins 63 % en poids de cuivre, le reste étant du zinc.

4. Support de résistance métallique caoutchouté selon au moins l'une quelconque des revendications précédentes, **caractérisé en ce que** la quantité de fer dans le revêtement est supérieure ou égale à 1 % en poids et inférieure à 10 % en poids, de préférence supérieure ou égale à 3 % en poids et inférieure à 9 % en poids, par rapport à la masse totale de laiton et de fer.

5. Support de résistance métallique caoutchouté selon au moins l'une quelconque des revendications précédentes, **caractérisé en ce que** le revêtement est essentiellement exempt d'alliages zinc-fer.

6. Support de résistance métallique caoutchouté selon au moins l'une quelconque des revendications précédentes, **caractérisé en ce qu'**il contient de 1 à 2,5 pce d'au moins un accélérateur sulfénimide et/ou d'au moins un accélérateur sulfénamide à base de dibenzylamine.

7. Support de résistance métallique caoutchouté selon au moins l'une quelconque des revendications précédentes, **caractérisé en ce que** l'au moins un accélérateur sulfénimide est le N-tert-butyl-2-benzothiazolesulfénimide (TBSI).

8. Support de résistance métallique caoutchouté selon au moins l'une quelconque des revendications précédentes, **caractérisé en ce que** l'au moins un accélérateur sulfénamide à base de dibenzylamine est le N,N'-dibenzyl-2-benzothiazolesulfénamide (DBBS).

9. Pneumatique de véhicule, qui présente un support de résistance métallique caoutchouté avec une composition de gommage réticulée au soufre selon la revendication 1.

10. Pneumatique de véhicule selon la revendication 9, **caractérisé en ce que** la ceinture et/ou la carcasse contient le support de résistance métallique caoutchouté.
